# EUROPÄISCHE PATENTSCHRIFT

(11) **EP 1 445 048 B1**
(45) Veröffentlichungstag und Bekanntmachung des Hinweises auf die Patenterteilung: **20.04.2005**
(21) Anmeldenummer: 03002449.1
(22) Anmeldetag: 05.02.2003
(51) Int. Cl.: B23B 27/24

(54) **Rändelwerkzeug**
Knurling tool
Outil de moletage

(43) Veröffentlichungstag der Anmeldung: 11.08.2004
(73) Patentinhaber: Swarovski-Optik KG, 6060 Absam (AT)
(72) Erfinder: Mayr, Werner, 6060 Hall (AT); Erler, Hannes, 6111 Volders (AT)
(74) Vertreter: Torggler, Paul Norbert, Dr.

(56) Entgegenhaltungen:
- DE-A- 4 017 618
- DE-B- 1 045 762
- GB-A- 724 693

## Beschreibung

Die Erfindung betrifft ein Rändelwerkzeug mit einem Werkzeugkopf, in dem zwei Schwenkbolzen gelagert sind, wobei die Drehlage der Schwenkbolzen im Werkzeugkopf über eine Fixiereinrichtung festlegbar ist. Derartige Rändelwerkzeuge sind bereits bekannt, ein Beispiel ist im Deutschen Patent DE 970 092 gezeigt. Beim Stand der Technik erfolgt die gegenläufige, synchrone Einstellung von zwei Schwenkbolzen über eine Gewindespindel. Eine Fixierung der Drehlage der Schwenkbolzen erfolgt dabei dadurch, dass die Gewindespindel selbsthemmend ausgebildet ist.

Dabei ist die Gewindespindel allerdings relativ hohen Belastungen ausgesetzt, die im Laufe der Zeit zu einem unerwünschten Spiel führen können.

Die DE 1 045 762 offenbart einen Kreuzrändelapparat, bei dem die Fixierung der Schwenkbolzen über Klemmschlitze erfolgt, die durch Festziehen einer Klemmschraube zusammengepresst werden. Bei einer gattungsfremden Einrichtung gemäß der DE 40 17 618 wird ein plattenförmiges Wendemesser mit Hilfe einer keilförmigen Klemmvorrichtung fixiert.

GB-724,693-A offenbart ein Rändelwerkzeug gemäß dem Oberbegriff des Anspruchs 1

Aufgabe der Erfindung ist es, ein Rändelwerkzeug der eingangs genannten Gattung unter Vermeidung oben genannter Nachteile zu schaffen, das sich durch einen robusten Aufbau auszeichnet und bei dem die Schwenkbolzen mit den Rändelrädern einfach verstellbar und in Ihrer Drehlage satt fixierbar sind.

Erfindungsgemäß wird dies durch die Merkmale des Anspruchs 1 erreicht.

Die Fixiereinrichtung mit dem eigens dafür vorgesehenen Klemmorgan kann einfach über eine Schraube betätigt werden, wobei diese Schraube günstigerweise mit dem Klemmorgan so in Verbindung steht, dass das Klemmorgan in beiden Richtungen mitgenommen wird. Beim Hineindrehen der Schraube in den Werkzeugkopf kann somit über den Schraubenkopf das Klemmorgan mitgenommen werden und sich durch Abstützen über eine Schrägfläche satt an beide Schwenkbolzen anlegen, womit deren Drehlage gemeinsam relativ zum Werkzeugkopf fixiert wird. Beim Herausdrehen der Schraube kann dann das Klemmorgan der Schraube aktiv mitgenommen werden, womit die Schwenkbolzen wieder frei sind, um beispielsweise über eine an sich bekannte Gewindespindel synchron in ihrer Drehlage eingestellt zu werden.

Weitere Vorteile und Einzelheiten der Erfindung werden anhand der nachfolgenden Figurenbeschreibung näher erläutert.
Die Fig. 1 zeigt eine Seitenansicht auf ein Ausführungsbeispiel eines erfindungsgemäßen Rändel(fräs)werkzeuges,
die Fig. 2 zeigt einen Schnitt gemäß der Linie A-A der Fig. 1,
die Fig. 3 zeigt einen Schnitt gemäß der Linie B-B der Fig. 2,
die Fig. 4 zeigt einen Schnitt gemäß der Linie C-C der Fig. 3,
die Fig. 5 zeigt eine perspektivische Ansicht.

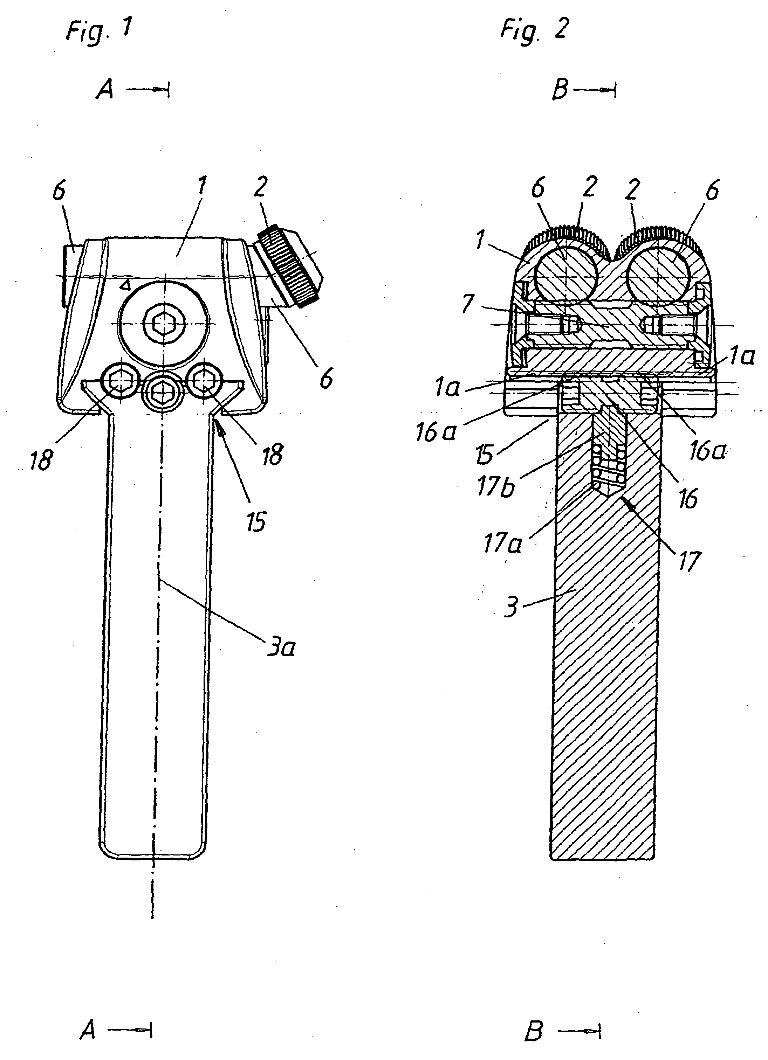

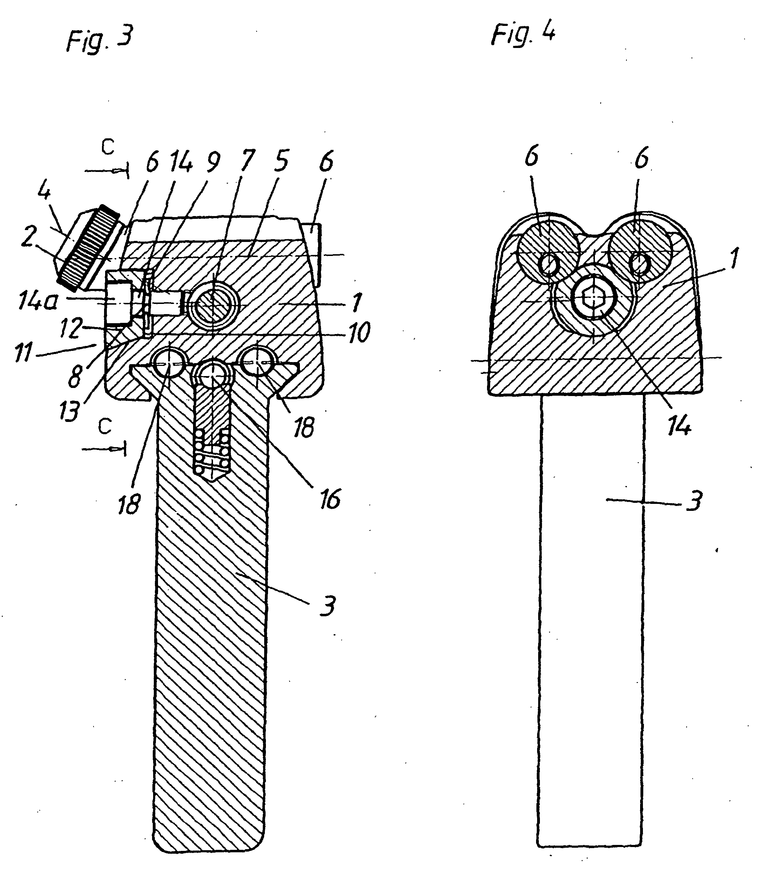

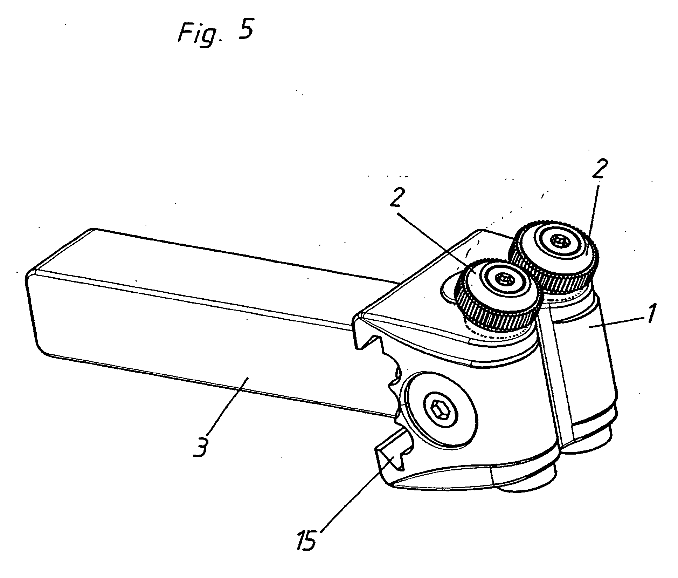

Das in den Fig. 1 bis 5 dargestellte Rändelfräswerkzeug weist einen Werkzeugkopf 1 auf, der zwei Rändelräder 2 trägt. Der Werkzeugkopf 1 ist - wie noch näher erläutert wird - verstellbar am Schaft 3 gelagert.

Jedes der beiden Rändelräder 2 ist um eine Achse 4 frei drehbar an einem Schwenkbolzen 6 gelagert, der wiederum drehbar im Werkzeugkopf 1 gelagert ist. Die beiden Schwenkbolzen 6 können über eine Gewindespindel 7 gemeinsam, aber gegenläufig im Werkzeugkopf 1 verstellt werden, womit der relative Abstand der beiden Rändelräder 2 einstellbar ist. Diese "Synchronverstellung" ist beispielsweise aus der DE 970 092 an sich bekannt.

Um die einmal eingestellte Drehlage der Schwenkbolzen 6 um die Achse 5 im Werkzeugkopf 1 festzulegen, ist eine Arretiervorrichtung 11 vorgesehen. Diese weist ein Klemmorgan 12 auf, das sich einerseits auf einer Schrägfläche 13 des Werkzeugkopfes 1 abstützt und andererseits an der Umfangsfläche der Schwenkbolzen 6 anliegt. Bewegt bzw. geklemmt wird dieses Klemmorgan 12 über eine Schraube 14, die in den Werkzeugkopf 1 einschraubbar ist. Beim Einschrauben der Schraube 14 (mit Schraubenkopf 14a) in horizontaler Richtung gemäß den Fig. 1 bis 4 wandert das Klemmorgan 12 durch die Schrägfläche 13 nach oben und klemmt gemeinsam und synchron auf einfache Weise die beiden Schwenkbolzen 6 in der vorher über die Spindelschraube 7 eingestellten Lage fest.

Beim Herausdrehen der Schraube 14 nimmt die in der Nut 8 der Schraube 14 gelagerte Scheibe 9, die an der Hinterseite 10 des Klemmorgans 12 anliegt, das Klemmorgan 12 mit nach außen und löst so aktiv die Klemmung.

Zur Führung des Werkzeugkopfes 1 gegenüber dem Schaft 3 ist eine quer zur Schaftachse 3a verlaufende Linearführung 15 vorgesehen, die beim Ausführungsbeispiel als Schwalbenschwanzführung ausgebildet ist.

Zur Einstellung der relativen Lage vom Werkzeugkopf 1 und Schaft 3 ist als Verstelleinrichtung eine Verstellschraube 16 vorgesehen, die in den Fig. 1 bis 4 in horizontaler Richtung verläuft. Diese Verstellschraube 16 ist im Schaft 3 drehbar aber axial unverschieblich gelagert und greift mit ihren Gewindezügen 16a in entsprechende Gewindezüge 1 a am Werkzeugkopf 1 ein. Damit ist eine präzise Verstellung des Werkzeugkopfes 1 gegenüber dem Schaft 3 möglich. Um einen spielfreien Lauf der Gewindezüge 16a der Verstellschraube 16 in den Gewindezügen 1a des Werkzeugkopfes 1 zu ermöglichen, ist eine allgemein mit 17 bezeichnete Vorspanneinrichtung vorgesehen, die die Verstellschraube 16 in die Gewindezüge 1a am Werkzeugkopf 1 drückt. Die Vorspanneinrichtung 17 weist eine Feder 17a und einen Stößel 17b auf.

Nachdem die relative Lage des Werkzeugkopfes 1 zum Schaft 3 über die Verstellschraube 16 eingestellt worden ist, kann man über eine Fixiereinrichtung diese eingestellte Lage robust festlegen. Die Fixiereinrichtung besteht beim vorliegenden Ausführungsbeispiel aus zwei im Wesentlichen walzenförmigen Klemmexzentem 18, die auf beiden Seiten der Verstellschraube 16 jeweils in Verstellrichtung verlaufen. Durch Verdrehen dieser Klemmexzenter 18 kommen diese satt am Werkzeugkopf 1 zur Anlage und sorgen damit für eine Verklemmung von Werkzeugkopf 1 und Schaft 3.

Insgesamt lässt sich über das Verstellen der Verstellschraube 16 und anschließenden Drehen der Klemmexzenter 18 auf einfache Weise schnell und präzise die relative Lage des Schaftes 3 zum Werkzeugkopf 1 festlegen. Damit ist eine Anpassung an die verschiedensten Maschinentypen möglich.

Die Erfindung ist selbstverständlich nicht auf die dargestellten Ausführungsbeispiele beschränkt. Beispielsweise kann der Werkzeugkopf 1 auch eine andere Zahl von Rändelrädern 2 aufweisen. Auch die Verstellung und die Anordnung der Rändelräder 2 im Kopf kann variieren. Selbstverständlich sind die Rändelräder 2 bevorzugt austauschbar und können je nach gewünschter Rändelung ausgewechselt werden.

## Patentansprüche

1. Rändelwerkzeug mit einem Werkzeugkopf (1), in dem zwei Schwenkbolzen (6) drehbar und einstellbar gelagert sind, an denen je ein Rändelrad (2) um eine zur Achse (5) des Schwenkbolzens (6) geneigt verlaufende Achse (4) frei drehbar gelagert ist, wobei die Drehlage der Schwenkbolzen (6) im Werkzeugkopf (1) über eine Fixiereinrichtung (9, 12, 14) festlegbar ist, **dadurch gekennzeichnet, dass** die Fixiereinrichtung (9, 12, 14) ein gegenüber dem Werkzeugkopf (1) verstellbares Klemmorgan (12) aufweist, das zur Fixierung der Schwenkbolzen (6) einerseits am Werkzeugkopf (1) und andererseits an den Schwenkbolzen (6) anliegt, wobei das Klemmorgan (12) in direktem Kontakt mit beiden Schwenkbolzen (6) steht.

2. Rändelwerkzeug nach Anspruch 1, **dadurch gekennzeichnet, dass** das Klemmorgan (12) keilförmig ausgebildet ist und sich an einer Schrägfläche (13) am Werkzeugkopf (1) abstützt.

3. Rändelwerkzeug nach Anspruch 1 oder Anspruch 2, **dadurch gekennzeichnet, dass** das Klemmorgan (12) über eine im Werkzeugkopf (1) gelagerte Schraube (14) - vorzugsweise in zwei entgegengesetzte Richtungen - bewegbar ist.

4. Rändelwerkzeug nach Anspruch 3, **dadurch gekennzeichnet, dass** die Schraube (14) an der dem Schraubenkopf (14a) abgewandeten Hinterseite (10) des Klemmorgans (12) ein Löseelement (9) zum Lösen des Klemmorgans (12) beim Herausdrehen der Schraube (14) aufweist.

5. Rändelwerkzeug nach Anspruch 4, **dadurch gekennzeichnet, dass** das Löseelement (9) eine in einer Nut (8) der Schraube (14) axial unverschieblich gehaltene Scheibe ist.

6. Rändelwerkzeug nach einem der Ansprüche 1 bis 5, **dadurch gekennzeichnet, dass** zur Einstellung der Drehlage des bzw. der Schwenkbolzen (6) eine Gewindespindel (7) vorgesehen ist und die Fixiereinrichtung (9, 12, 14) von der Gewindespindel (7) gesondert ausgebildet ist.

## Claims

1. A knurling tool comprising a tool head (1) in which two pivot pins (6) are rotatably and adjustably mounted, to each of which pivot pins a respective knurling wheel (2) is mounted freely rotatably about an axis (4) extending inclinedly relative to the axis (5) of the pivot pin (6), wherein the rotary position of the pivot pins (6) can be fixed in the tool head (1) by way of a fixing device (9, 12, 14), **characterised in that** the fixing device (9,12, 14) has a clamping member (12) which is displaceable with respect to the tool head (1) and which for fixing the pivot pins (6) bears on the one hand against the tool head (1) and on the other hand against the pivot pins (6), the clamping member (12) being in direct contact with both pivot pins (6).

2. A knurling tool according to claim 1 **characterised in that** the clamping member (12) is of a wedge-shaped configuration and bears against an inclined surface (13) of the tool head (1).

3. A knurling tool according to claim 1 or claim 2 **characterised in that** the clamping member (12) is movable by way of a screw (14) mounted in the tool head (1) - preferably in two opposite directions.

4. A knurling tool according to claim 3 **characterised in that** at the rear side (10) of the clamping member (12), which is remote from the screw head (14a), the screw (14) has a release element (9) for releasing the clamping member (12) when the screw (14) is unscrewed.

5. A knurling tool according to claim 4 **characterised in that** the release element (9) is a disc which is held axially immovably in a groove (8) in the screw (14).

6. A knurling tool according to one of claims 1 to 5 **characterised in that** a screwthreaded spindle (7) is provided for adjusting the rotary position of the pivot pin or pins (6) and the fixing device (9, 12, 14) is provided separately from the screwthreaded spindle (7).

## Revendications

1. Outil de moletage, comportant une tête d'outil (1) dans laquelle deux boulons pivotants (6) sont montés en rotation et de façon réglable, sur chacun desquels une molette (2) est montée librement en rotation autour d'un axe (4) qui est incliné par rapport à l'axe (5) des boulons pivotants (6), la position en rotation des boulons pivotants (6) dans la tête d'outil (1) pouvant être fixée par l'intermédiaire d'un dispositif de blocage (9, 12, 14), **caractérisé en ce que** le dispositif de blocage (9, 12, 14) comporte un organe de serrage (12) pouvant être déplacé par rapport à la tête d'outil (1) qui, pour le blocage des boulons pivotants (6), prend appui, d'une part sur la tête d'outil (1) et d'autre part sur les boulons pivotants (6), l'organe de serrage (12) étant en contact direct avec les deux boulons pivotants (6).

2. Outil de moletage selon la revendication 1, **caractérisé en ce que** l'organe de serrage (12) est cunéiforme et prend appui sur une surface oblique (13) de la tête d'outil (1).

3. Outil de moletage selon la revendication 1 ou la revendication 2, **caractérisé en ce que** l'organe de serrage (12) peut être déplacé - de préférence dans deux sens opposés - par l'intermédiaire d'une vis (14) prévue dans la tête d'outil (1).

4. Outil de moletage selon la revendication 3, **caractérisé en ce que**, sur la face arrière (10) de l'organe de serrage (12) opposée à la tête (14a) de vis, la vis (14) comporte un élément de découplage (9) destiné au découplage de l'organe de serrage (12) lors du dévissage de la vis (14).

5. Outil de moletage selon la revendication 4, **caractérisé en ce que** l'élément de dissociation (9) est un disque retenu immobile axialement dans une gorge (8) de la vis (14).

6. Outil de moletage selon l'une quelconque des revendications 1 à 5, **caractérisé en ce qu'**une vis (7) est prévue pour le réglage de la position en rotation du ou des boulons pivotants (6), et **en ce que** le dispositif de blocage (9, 12, 14) est agencé séparément de la vis(7).
